# NEUE EUROPÄISCHE PATENTSCHRIFT

(11) **EP 2 237 922 B2**
(45) Veröffentlichungstag und Bekanntmachung des Hinweises auf die Entscheidung über den Einspruch: **01.01.2020**
(45) Hinweis auf die Patenterteilung: 12.10.2016
(21) Anmeldenummer: 09700040.0
(22) Anmeldetag: 15.01.2009
(51) Int. Cl.: B23P 11/02, F16H 53/02, F01L 1/047, F02F 7/00

(54) **VERFAHREN UND VORRICHTUNG ZUR MONTAGE VON EINEM VERBUND, INSBESONDERE AUS EINER NOCKENWELLE UND EINEM GEHÄUSE**
METHOD AND APPARATUS FOR ASSEMBLING A COMPOSITE, IN PARTICULAR COMPRISING A CAMSHAFT AND A HOUSING
PROCÉDÉ ET DISPOSITIF DE MONTAGE D'UN ENSEMBLE, EN PARTICULIER CONSTITUÉ D'UN ARBRE À CAME ET D'UN BOÎTIER

(43) Veröffentlichungstag der Anmeldung: 13.10.2010
(73) Patentinhaber: Volkswagen Aktiengesellschaft, 38440 Wolfsburg (DE)
(72) Erfinder: SCHMECKENBECHER, Klaus, 09235 Burkhardsdorf (DE); HOFFMANN, Christoph, 09120 Chemnitz (DE); HELBIG, Matthias, 09116 Chemnitz (DE); RICHTER, Thilo, 09212 Limbach Oberfrohna (DE); TORSTEN, Ludwig, 09116 Chemnitz (DE); WERLER, Andreas, 08056 Zwickau (DE); KÜHN, Stefan, 09573 Augustusburg (DE); HINKEL, Michael, 09125 Chemnitz (DE)
(74) Vertreter: Bungartz, Florian
(86) Internationale Anmeldenummer: PCT/EP2009/000203
(87) Internationale Veröffentlichungsnummer: WO 2009/065970

(56) Entgegenhaltungen:
- EP-A- 0 230 731
- EP-A- 1 155 770
- DE-A1- 3 525 186
- DE-A1- 4 307 562
- DE-A1- 10 134 840
- DE-A1- 10 137 114
- DE-A1- 19 831 772
- DE-C1- 10 150 092
- DE-C1- 19 716 554
- JP-A- 2002 147 571
- JP-B2- 3 438 222
- US-A1- 2001 025 416
- US-A1- 2006 005 385

## Beschreibung

Die Erfindung betrifft eine Vorrichtung zur Montage von einem Verbund, bestehend aus mindestens einer Funktionselemente tragenden Welle, insbesondere aus Massenausgleichswelle oder Nockenwelle und einem diese in ungeteilten Lagern abstützenden Gehäuse gemäß dem Oberbegriff des Patentanspruches 1. Die Erfindung betrifft auch Verfahren zur Montage von einem solchen Verbund.

Vorbekannt ist aus der DE 23 36 241 A1 eine gebaute Steuerwelle, deren Nocken und Lager durch Fügen auf die Welle aufgebracht werden. Vor dem Fügeprozess wird die Welle abgekühlt und die Nocken werden erwärmt. Nocken und Welle sind nach dem Fügen und dem Temperaturausgleich kraftschlüssig verbunden. Die Nockenwelle kann nachfolgend in geteilte Lager montiert werden.

Vorbekannt ist aus der DE 198 31 772 A1 ein Zylinderkopf in dem eine Nockenwelle innerhalb ungeteilter Lager des Zylinderkopfes gefügt wird. Die Nocken werden hierfür innerhalb des Zylinderkopfes positioniert gehalten und die Welle wird nachfolgend durch die Bohrungen im Zylinderkopf und die Nockenelemente geschoben. An den axialen Stirnseiten der Nocken sind dabei Konturen angeordnet, welche in Konturen des benachbarten Nockens oder der Lager eingreifen und Nocken und Lager gegeneinander formschlüssig festlegen.

Das Fügen der Nockenwelle in ungeteilte Aufnahmen eines Zylinderkopfes hat den Vorteil, dass aufgrund der Verwendung kleinerer Lagerdurchmesser eine geringere Reibung an den Lagerstellen auftritt. Weiterhin wird im Fügeprozess eine komplette Baueinheit geschaffen.

Die US 2006/005385 A1 beschreibt ein Verfahren zur Herstellung einer gebauten Nockenwelle aus einer metallischen Welle mit aufgeschrumpften Nocken. Hierzu werden die Nocken in Nockenhalter eingelegt, mit deren Hilfe die Nocken in der gewünschten Relativlage und Winkelposition zueinander gehalten werden, und in diesen Nockenhaltern erwärmt. Von der gegenüberliegenden Seite der Nockenhalter her wird ein Gegenhalter durch die Nockenöffnungen geschoben. Die Welle wird abgekühlt und in die erwärmten Nocken eingefahren. Der Gegenhalter, der mittels der Kühllanze mit der Welle gekoppelt ist, wird dabei zurückgeschoben. Dadurch wird sichergestellt, dass die Wellenachse hochgenau gegenüber der Nockenachse ausgerichtet ist, sodass die gekühlte Welle die erwärmten Nocken nicht berührt.

Vorbekannt ist aus der EP 1 155 770 B1 der Verbund eines Zylinderkopfes und einer Nockenwelle bzw. einer Massenausgleichswelle und einem Gehäuse, der mit einem Fügeverfahren in ungeteilte Aufnahmen des Zylinderkopfes oder des Gehäuses erfolgt. Die Massenausgleichsgewichte oder die Nocken werden vorpositioniert gehalten und nach dem Überstülpen der Haube wird eine Welle durch die Bohrungen der Haube und der Funktionselemente, wie Nocken oder Massenausgleichsgewicht, geschoben. Die Verbindung der Elemente mit der Welle erfolgt dabei kraftschlüssig, wobei ein Aufschrumpfen oder Innenhochdruckumformen zur Anwendung kommen kann.

Die EP 1 155 770 B1 offenbart eine Vorrichtung zur Montage von einem Verbund gemäß Oberbegriff des Anspruchs 1 und ein Verfahren zur Montage eines solchen Verbunds.

Das Fügeverfahren stellt insbesondere für Nockenwellen mehrzylindriger Motoren Anforderungen an die konstruktive Gestaltung des Werkzeuges zur Positionierung der Nocken. Der Stand der Technik beschreibt hierfür einfache Auflageflächen an denen die Elemente gehalten und ausgerichtet werden. Insbesondere bei mehrzylindrigen Brennkraftmaschinen müssen eine Vielzahl von Nocken zueinander phasenverschoben auf der Welle gehalten und positioniert und beim Fügen axial gegen die Fügekraft und in ihrer Phasenlage zueinander positioniert gehalten werden. Die Nocken weisen aufgrund ihrer unterschiedlichen Phasenlage für verschiedene Zylinder unterschiedliche Auflagepositionen auf dem Montagewerkzeug auf. Sie können sowohl im Grundkreis als auch mit der Nockenspitze am Montagewerkzeug anliegen. Insbesondere beim Fügen innerhalb einer geschlossenen Haube stellt der Eingriff eines Positionierelementes, der nur einseitig erfolgen kann, ein Problem dar. Da die Lage der Nocken entscheidend für den Gaswechsel beim späteren Betrieb der Nockenwelle ist, sind hier nur geringe Fertigungstoleranzen zulässig. Abweichungen der Nocken zueinander führen zu falschen Steuerzeiten und zu unterschiedlicher Befüllung der Zylinder. Daher ist eine möglichst verdrehsichere Positionierung der Nocken beim Fügeprozess erforderlich. Aufgabe der Erfindung ist es daher, die oben genannten Nachteile zu vermeiden und eine verbesserte Vorrichtung und ein verbessertes Verfahren anzugeben, derart, dass eine Welle in ungeteilte Lager eines Gehäuses gefügt wird, wobei Funktionselemente auf der Welle während des Fügeprozesses in ihrer vorbestimmten Phasenlage gehalten werden und während des Fügeprozesses Abweichungen bezüglich der vorbestimmten Phasenlage minimiert sind.

Die Aufgabe wird erfindungsgemäß mit einer Vorrichtung gemäß Anspruch 1 und mit den Verfahren gemäß den Ansprüchen 10 und 11 gelöst.

Vorteilhafte Ausgestaltungen der Vorrichtung bzw. der Verfahren sind in den Unteransprüchen angegeben.

Erfindungsgemäß weist die Vorrichtung zur Montage von einem Verbund aus einer zum Beispiel als Nockenwelle ausgebildeten Welle und einem diese in ungeteilten Lagern abstützenden Gehäuse Positioniereinrichtungen auf, die vor dem Fügen die z.B. als Nocken ausgebildeten Funktionselemente so in vorbestimmter Phasenlage im Gehäuse halten, dass eine Welle durch die Lager des Gehäuses und Öffnungen in den Nocken einschiebbar ist. Das Gehäuse kann dabei vorzugsweise eine geschlossene Haube eines Zylinderkopfes, der Zylinderkopf oder eine Rahmenkonstruktion sein. Die Ausnehmungen in der Positioniereinrichtung für die Nocken und die weiteren Funktionselemente weisen dabei wenigstens einen Anschlag auf, der den Nocken entgegen der Fügerichtung der Welle abstützt. In den Ausnehmungen der Positioniereinrichtung ist eine Teilkontur der Nockenkontur als Negativprofil eingebracht, so dass die Nocken in einer Phasenlage gemäß ihrer Fügeposition gehalten werden. Für eine sichere Anlage der Nocken umgreift die jeweilige Ausnehmung den Nocken zumindest auf einem Teil von dessen Außenkontur, so dass einerseits eine phasenrichtige Anlage des Nockens gesichert ist und gleichzeitig eine sichere Anlage für den Fügeprozess erzielt wird. Vorzugsweise umgreift die Negativkontur den Nocken nur halbseitig, so dass ein Einbringen der Nocken in die Aufnahmen der Positioniereinrichtung mit einem Positioniervorgang in einer Richtung vertikal von oben in die Aufnahmen erfolgen kann und ein Entnehmen der Positioniereinrichtung nach dem Fügen der Welle ebenfalls in einer Verfahrrichtung vertikal erfolgen kann. In einer alternativen Ausgestaltung umgreifen die Ausnehmungen der Positioniereinrichtung die Nockenkontur auf mehr als der Hälfte von dessen Umfang, so dass der Nocken beim Einbringen in die Aufnahme durch eine vertikale und horizontale Relativbewegung zur Aufnahme positioniert werden muss. Das weitere Umgreifen der Aufnahme ist dabei hinsichtlich der erforderlichen Haltekräfte beim Fügen vorteilhaft.

Werden auf die Welle, die bevorzugt eine Nockenwelle ist, neben Nocken weitere Funktionselemente, wie Wälz- oder Gleitlager, Geberräder, Pumpenantriebe, sowie Kettenräder oder Riemenscheiben für deren Antrieb gefügt, so ist für deren sichere Positionierung gleichfalls ein Negativprofil von deren Außenkontur in den Ausnehmungen der Positioniereinrichtung abgebildet.

Erfindungsgemäß ist die Aufnahme der Positioniereinrichtung so gestaltet, dass eine zusätzliche, willkürlich schaltbare Haltekraft zwischen Nocken und gegebenenfalls den weiteren Funktionselementen und der Aufnahme erzeugbar ist. Unabhängig von der Ausbildung der Aufnahmen wird dabei eine zusätzliche Haltekraft aufgebracht, welche den Nocken und gegebenenfalls die weiteren Funktionselemente auf der Aufnahme festhält.

In einer bevorzugten Ausgestaltung wird die Haltekraft mittels Unterdruck aufgebracht. Alternativ ist eine mechanische Haltekraft oder eine magnetische Haltekraft möglich.

In der bevorzugten Ausführungsform, dem Aufbringen der Haltekraft mittels Unterdruck sind die als Aufnahmen ausgebildeten Ausnehmungen auf einem Teilbereich der teilweise den Nocken umgreifenden Kontur mit einer Öffnung versehen, welche von der Oberfläche der Nocken oder der weiteren Funktionselemente überdeckt ist und welche mit Unterdruck beaufschlagbar ist.

In einer vorteilhaften Ausführung der Erfindung ist ein Zentrierdorn vorgesehen, welcher durch die Lager des Gehäuses und die mit diesen fluchtenden Öffnungen in den Nocken und den weiteren Funktionselementen geschoben wird. Der Zentrierdorn positioniert dabei die Nocken auf den Aufnahmen in der Positioniereinrichtung und übt eine mechanische Haltekraft aus, welche die Nocken in der gewünschten Phasenlage auf den Aufnahmen hält. Der Zentrierdorn weist dabei einen Außendurchmesser auf, der gleich oder geringfügig kleiner zum Innendurchmesser der zu fügenden Welle ausgebildet ist.

Die Montagevorrichtung weist in einer vorteilhaften Weiterbildung einen Schlitten auf, der axial in der Vorrichtung zwischen zwei Endpositionen bewegbar ist. In einer Position sind dabei die Nocken und die weiteren Funktionselemente, welche über die Positioniereinrichtungen auf dem Schlitten gehalten sind, mit dem Zentrierdorn in Eingriff. Der Schlitten ist dabei axial entlang des Zentrierdorns verschieblich. An den Zentrierdorn anschließend ist mit gleicher axialer Lage eine Nockenwelle spannbar. Gemäß dieser Ausführung der Erfindung wird der Schlitten aus der beschriebenen Endposition in eine weitere Endposition bewegt, in welcher die anschließend an den Zentrierdorn gespannt Welle in die Lager im Gehäuse und in die Öffnungen in den Nocken und gegebenenfalls in die Öffnungen der weiteren Funktionselemente eingreift. Der Fügevorgang erfolgt durch eine Schlittenbewegung des auf dem Zentrierdorn vorpositionierten Verbundes aus Gehäuse, Nocken und gegebenenfalls weiteren Funktionselementen. In einer alternativen Ausführung ist der Verbund fest auf der Montagevorrichtung gespannt und der Zentrierdorn und die sich anschließende Welle werden vorzugsweise hydraulisch oder pneumatisch bewegt.

In einer vorteilhaften Ausführung erfolgt das Aufwärmen der Nocken und gegebenenfalls der weiteren Funktionselemente in der Montagevorrichtung. Hierfür kann diese eine vorzugsweise induktive Aufwärmeinheit enthalten, die eine Einheit zum Erwärmen der Nocken und gegebenenfalls weiterer Funktionselemente aufweist, welche diese im phasenrichtig positionierten Zustand auf den Aufnahmen der Montagevorrichtung erwärmt. Die Aufwärmeinrichtung kann dabei integraler Bestandteil der Montagevorrichtung sein oder als Durchlauf in einer Prozesskette zum Fügen vorgesehen sein.

Die Erfindung beschreibt weiterhin zwei Verfahren zum Fügen einer Nockenwelle in ungeteilte Aufnahmen eines die Nockenwelle tragenden Gehäuses. Sie beinhalten die in den Ansprüchen 10 und 11 erwähnten Verfahrensschritte.

In einem ersten Verfahrensschritt werden die Nocken und gegebenenfalls weitere Funktionselemente wie Geberräder, Lagerelemente und Antriebsräder in die Ausnehmungen der Positioniereinrichtung eingebracht. Diese tragen in vorteilhafter Weise eine Gegenkontur zum Nocken und gegebenenfalls den Funktionselementen um ein phasenrichtiges sicheres Anliegen während des Fügeprozesses zu sichern. Weiterhin erfolgt ein Positionieren des die Nockenwellen tragenden Gehäuses in einer Lage in der axial die Lager für die Welle im Gehäuse mit den Öffnungen in den Nocken und gegebenenfalls den weiteren Funktionselementen fluchten, so dass eine Welle durch die Aufnahmen des Gehäuses und die Bohrungen in der Nockenwelle einschiebbar ist. Es erfolgt ein Erwärmen der Nocken und der weiteren Funktionselemente, wobei dies in der Vorrichtung selbst nach dem Einlegen erfolgen kann oder alternativ bereits vorerwärmte Nocken und gegebenenfalls weitere Funktionselemente in die Aufnahmen eingebracht werden. Es erfolgt weiterhin ein Abkühlen der in das Gehäuse einzubringenden Welle vor dem Fügevorgang. Erfindungsgemäß wird eine Haltekraft zwischen Nocken und den gegebenenfalls weiteren Funktionselementen und der Aufnahme der Positioniereinrichtung aufgebracht, um eine sichere Anlage der Nocken und der Funktionselemente in den Aufnahmen der Positioniereinrichtung zu sichern.

Vor dem Einbringen der Welle durch die Aufnahmen im Gehäuse und durch die Öffnungen in den Nocken und gegebenenfalls den weiteren Funktionselementen wird ein Zentrierdorn anstelle der später zu fügenden Welle eingebracht. Dieser zentriert die Nocken und gegebenenfalls die weiteren Funktionselemente in ihrer axialen Lage und erzeugt damit eine mechanische Haltekraft für die Nocken und gegebenenfalls weitere Funktionselemente in den Konturen der Aufnahmen. Es wird nachfolgend die Welle an den Zentrierdorn außerhalb des Gehäuses in axial gleicher Lage positioniert und der Fügevorgang erfolgt mittels einer Relativbewegung zwischen Gehäuse und Zentrierdorn und der sich daran anschließenden Welle, bei dem die Welle die Position des Zentrierdornes innerhalb des Gehäuses einnimmt. Das Einbringen des Zentrierdorns erleichtert das Fügen, da durch die exakt vorpositionierte Lage der Öffnungen der Nocken und der Aufnahmen für die Welle im Gehäuse beim Einbringen der Welle keine Positionierung mehr erfolgen muss. Weiterhin werden die Nocken bis zum Fügevorgang durch den Zentrierdorn in ihrer Lage auf den Aufnahmen fixiert.

Das erfindungsgemäße Montageverfahren erfolgt dabei in einer Ausgestaltung der Erfindung derart, dass ein auf der Montagevorrichtung angeordneter Schlitten, der das Gehäuse und die Positioniereinrichtungen trägt nach dem Einbringen der Nocken und der weiteren Funktionselemente und dem Positionieren des Gehäuses, axial auf der Montagevorrichtung relativ zum Zentrierdorn verfahren wird, so dass der, fest mit einer Tragstruktur der Montagevorrichtung verbundene Zentrierdorn, in die Lager im Gehäuse und die Öffnungen der Nocken und der weiteren Funktionselemente eingreift und nachfolgend eine Welle anschließend an den Zentrierdorn in axial gleicher Lage zum Zentrierdorn gespannt wird. Durch ein Verfahren des Schlittens axial entlang des Zentrierdorns und der Welle werden die Nocken und gegebenenfalls weiteren Funktionselementen im Gehäuse mit der Welle gefügt.

In einer alternativen Ausgestaltung des erfindungsgemäßen Montageverfahrens ist die Positioniereinrichtung fest auf der Montagevorrichtung angeordnet und es erfolgt ein Verfahren des Zentrierdorns und der Welle. Nach dem Einbringen der Nocken und gegebenenfalls der weiteren Funktionselemente und dem Positionieren des Gehäuses wird der Zentrierdorn durch axiales Verfahren zum Gehäuse in die Lager des Gehäuses und die Öffnungen in den Nocken und den gegebenenfalls weiteren Funktionselementen eingebracht. Nachfolgend erfolgt ein Spannen der Welle außerhalb des Gehäuses anschließend an den Zentrierdorn in axial gleicher Lage zu diesem. Für den Fügevorgang erfolgt ein gemeinsames Verfahren von Welle und Zentrierdorn, wobei die Welle durch die Lager im Gehäuse und die Öffnung der Nocken und der gegebenenfalls weiteren Funktionselemente gefügt wird.

Erfindungsgemäß erfolgt ein Erwärmen der Nocken und der gegebenenfalls weiteren Funktionselemente außerhalb der Vorrichtung vor dem Einbringen in die Aufnahmen der Positioniereinrichtung.

In einer alternativen Ausgestaltungsform des Verfahrens erfolgt ein Erwärmen der Nocken und der gegebenenfalls weiteren Funktionselemente im bereits vorpositionierten Zustand auf den Aufnahmen. Die Zeit vom Erwärmen bis zum eigentlichen Fügevorgang kann hierdurch verkürzt werden, so dass eine große Temperaturdifferenz von Welle und Nocken gesichert wird, was den Fügevorgang erleichtert.

Erfindungsgemäß wird eine zusätzliche Halterkraft für die Nocken und die gegebenenfalls weiteren Funktionselemente erzeugt, indem diese vor dem Fügen mittels Unterdruck in den Ausnehmungen der Positioniereinrichtung gehalten werden. Der Unterdruck kann dabei während des Fügevorgangs aufrechterhalten werden, so dass eine genaue Endlage der Nocken und der gegebenenfalls weiteren Funktionselemente auf der Aufnahme sichergestellt wird.

Die zuvor beschriebene Vorrichtung und das zugehörigen Verfahren können an beliebigen Verbünden aus Wellen und Gehäuse mit Vorteil eingesetzt werden. So können als Wellen Massenausgleichswellen verwendet werden, welche in Lager in Gehäusen von Massenausgleichsgetrieben z.B. für Brennkraftmaschinen gefügt werden.

Als Funktionselemente werden dann beispielsweise Ausgleichsmassen auf die Wellen geschrumpft.

Weitere vorteilhafte Ausgestaltung sind der Beschreibung zu dem nachfolgend dargestellten Ausführungsbeispiel der Erfindung zu entnehmen.

### Hierbei zeigen,

- Figur 1:: schematische Darstellung der Ansicht einer typischen Einbausituation einer Nockenwelle einer Verbrennungskraftmaschine,
- Figur 2:: schematische Darstellung eines Gehäuses, ohne eingebaute Nockenwelle,
- Figur 3:: schematische Darstellung einer Positioniereinrichtung,
- Figur 4:: schematische Darstellung einer alternativen Ausgestaltung einer Positioniereinrichtung,
- Figur 5:: schematische Darstellung einer weiteren alternativen Ausgestaltung einer Positioniereinrichtung,
- Figur 6:: Ausführung der vorliegenden Erfindung mit einem Zentrierdorn,
- Figur 7:: Weiterbildung der vorliegenden Erfindung mit einem Grundkörper, der als Schlitten ausgeführt ist,
- Figur 8:: schematische Darstellung des Zusammenwirkens des Zentrierdorns und einer Nockenwelle,
- Figur 9:: schematische Darstellung eines Verfahrensschrittes gemäß der vorliegenden Erfindung,
- Figur 10:: schematische Darstellung eines weiteren Verfahrensschrittes gemäß der vorliegenden Erfindung,
- Figur 11:: schematische Darstellung eines noch weiteren Verfahrensschrittes gemäß der vorliegenden Erfindung,
- Figur 12:: schematische Darstellung eines noch weiteren Verfahrensschrittes gemäß der vorliegenden Erfindung und
- Figur 13:: schematische Darstellung eines noch weiteren Verfahrensschrittes gemäß der vorliegenden Erfindung.

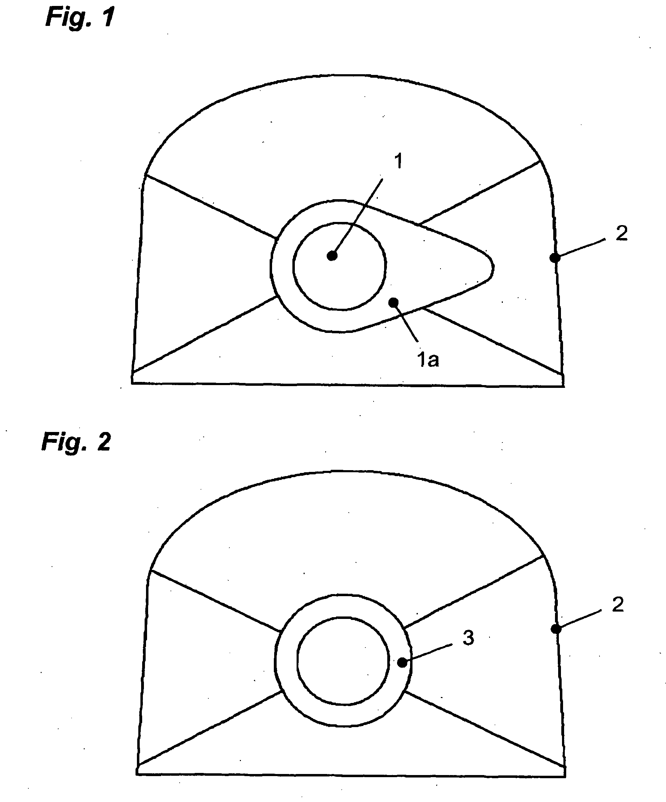

Figur 1 zeigt schematisch die Ansicht einer typischen Einbausituation einer als Nockenwelle 1 ausgebildeten Welle einer Verbrennungskraftmaschine in einem Gehäuse 2, das vorzugsweise die Haube eines Zylinderkopfes darstellt. Auf der Nockenwelle 1 sind mehrere als Nocken 1 a ausgebildete Funktionselemente und gegebenenfalls weitere Funktionselemente, wie beispielsweise Geberräder, Pumpenbetätigungsstößel etc. angeordnet.

In Figur 2 ist das Gehäuse 2 ohne die Nockenwelle 1 in einer weiteren Ansicht schematisch dargestellt, so dass deutlich wird, dass die Nockenwelle 1 in dem Gehäuse 2 in ungeteilten Lagern 3 abgestützt ist. Um möglichst geringe Reibungsverluste zwischen den Lagern 3 und der Nockenwelle 1 sicherzustellen, weisen die Lager 3 vergleichsweise kleine Durchmesser auf, so dass ein Fügen der Nockenwelle 1 und den Nocken 1a innerhalb des Gehäuses 2 erfolgen muss.

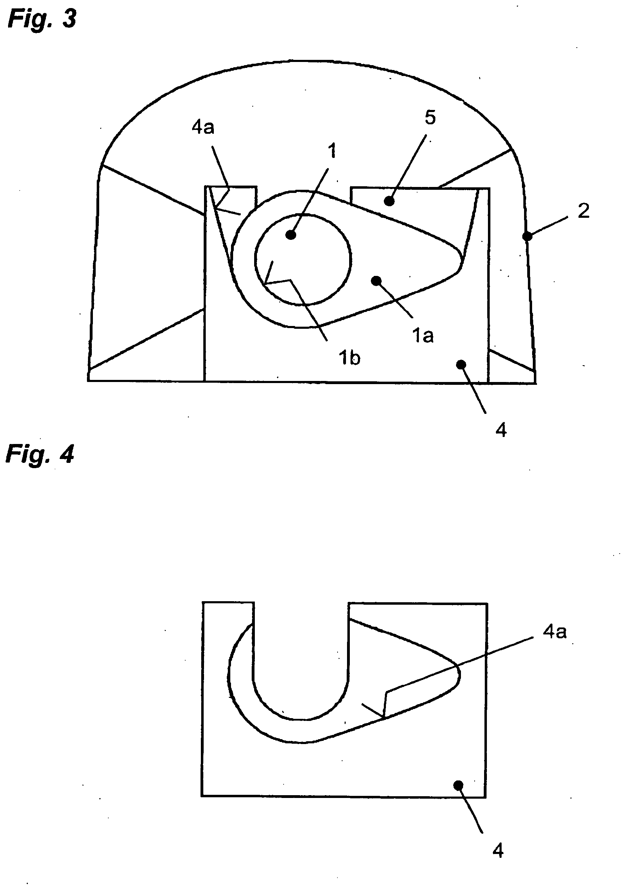

Wie in Figur 3 dargestellt, ist erfindungsgemäß zur Montage des Verbundes aus Nockenwelle 1, den Nocken 1a und des Gehäuses 2 innerhalb dieses Gehäuses 2 eine Positioniereinrichtung 4 vorgesehen. Die Positioniereinrichtung 4 hält vor dem Fügen die Nocken 1a und gegebenenfalls die weiteren Funktionselemente so in vorbestimmter Phasenlage im dem Gehäuse 2, dass die Nockenwelle 1 durch die Lager 3 des Gehäuses 2 und Öffnungen 1 b in den Nocken 1 a und den gegebenenfalls weiteren Funktionselementen einschiebbar ist. Die Positioniereinrichtungen 4 für die Nocken 1 a weisen dabei wenigstens einen Anschlag 5 auf, der den Nocken 1 a entgegen der axialen Fügerichtung der Nockenwelle 1 abstützt. In als Aufnahmen für die Nocken 1 a wirkenden Ausnehmungen 4a der Positioniereinrichtung 4 ist eine Teilkontur der Kontur des jeweiligen Nockens 1a als Negativprofil eingebracht, derart dass die Nocken 1a in einer bezüglich ihrer relativen Winkelstellungen zueinander korrekten Phasenlage gemäß ihrer Fügeposition gehalten werden. Je nach Anzahl der Zylinder der zu Grunde liegenden Verbrennungskraftmaschine sind mehrere Positioniereinrichtungen 4 vorgesehen.

Wie in Figur 3 dargestellt, ist ein Nocken 1 a in eine Ausnehmung 4a der Positioniereinrichtung 4 eingelegt. Für eine sichere Anlage der Nocken 1 a umgreift die jeweilige Ausnehmung 4a den Nocken 1a zumindest auf einem Teil von dessen Außenkontur, so dass einerseits die erwähnte drehphasenrichtige Anlage des Nockens 1a gesichert ist und gleichzeitig eine sichere Anlage für ein nachfolgendes Fügen der Nockenwelle 1 und der Nocken 1 a erzielt wird. Wie in Figur 3 weiterhin dargestellt, umgreift die Negativkontur des Nockens 1 a diesen nur halbseitig, so dass ein Einbringen der Nocken 1 a in die Ausnehmungen 4a der Positioniereinrichtung 4 mit einem Positioniervorgang in einer Richtung vertikal von oben in die Ausnehmungen 4a erfolgen kann und ein Entnehmen der Positioniereinrichtung 4 nach dem Fügen der Nockenwelle 4 ebenfalls in einer Verfahrrichtung vertikal erfolgen kann.

Wie in Figur 4 dargestellt, umgreift in einer alternativen Ausgestaltung der Erfindung die Aufnahme 4a der Positioniereinrichtung 4 die Kontur des Nockens 1 a auf mehr als der Hälfte von dessen Umfang, so dass der jeweilige Nocken 1 a beim Einbringen in die Ausnehmung 4a durch eine vertikale und horizontale Relativbewegung zur Ausnehmung 4a positioniert werden muss.

Werden auf die Nockenwelle 1 neben Nocken 1a weitere Funktionselemente, wie Wälz-oder Gleitlager, Geberräder, Pumpenantriebe, sowie Kettenräder oder Riemenscheiben für deren Antrieb gefügt, so ist für deren sichere Positionierung gleichfalls ein Negativprofil von deren Außenkontur in den Ausnehmungen 4a der Positioniereinrichtung 4 abgebildet.

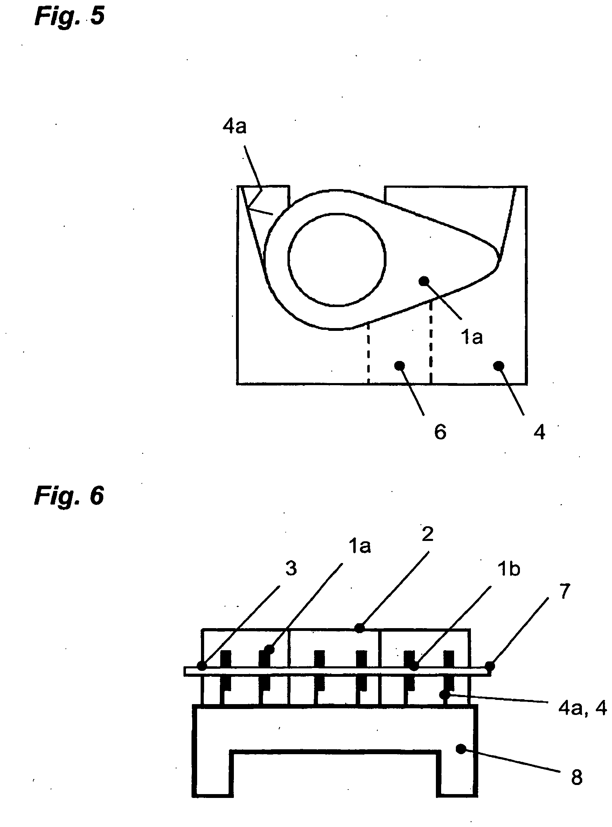

Es ist weiterhin erfindungsgemäß die Ausnehmung 4a der Positioniereinrichtung 4 so gestaltet, dass eine zusätzliche, willkürlich schaltbare Haltekraft zwischen Nocken 1 a und gegebenenfalls den weiteren Funktionselementen und der Ausnehmung 4a erzeugbar ist. Unabhängig von der Ausbildung der Ausnehmung 4a wird dabei eine zusätzliche Haltekraft aufgebracht, welche den Nocken 1 a und gegebenenfalls die weiteren Funktionselemente auf der Ausnehmung 4a festhält. In einer bevorzugten Ausgestaltung wird die Haltekraft mittels Unterdruck aufgebracht. Alternativ ist eine mechanische Haltekraft oder eine magnetische Haltekraft möglich. In der bevorzugten Ausführungsform, dem Aufbringen der Haltekraft mittels Unterdruck, sind, wie in Figur 5 dargestellt, die Ausnehmungen 4a auf einem Teilbereich der teilweise den Nocken 1 a umgreifenden Kontur mit einer Öffnung 6 versehen, welche von der Oberfläche der Nocken 1 a oder der weiteren Funktionselemente überdeckt ist und welche mit Unterdruck beaufschlagbar ist.

In Figur 6 ist schematisch eine Ausführung der vorliegenden Erfindung in einer Seitenansicht dargestellt. Insbesondere ist ein Zentrierdorn 7 vorgesehen, welche durch die Lager 3 des Gehäuses 2 und die mit diesen fluchtenden Öffnungen 1 b in den Nocken 1 a und den weiteren Funktionselementen geschoben wird. Der Zentrierdorn 7 positioniert dabei die Nocken 1a auf den Ausnehmungen 4a in der Positioniereinrichtung 4 und übt eine mechanische Haltekraft aus, welche die Nocken 1 a in der gewünschten Phasenlage auf den Ausnehmungen 4a hält. Der Zentrierdorn 7 weist dabei einen Außendurchmesser auf, der gleich oder geringfügig kleiner zum Innendurchmesser der zu fügenden Nockenwelle 1 ausgebildet ist. Figur 6 zeigt beispielhaft das Fügen einer Nockenwelle 1 einer Verbrennungskraftmaschine mit drei Zylindern. Außerdem ist ein Grundkörper 8 vorgesehen, auf welchem die Positioniereinrichtungen 4 angeordnet sind.

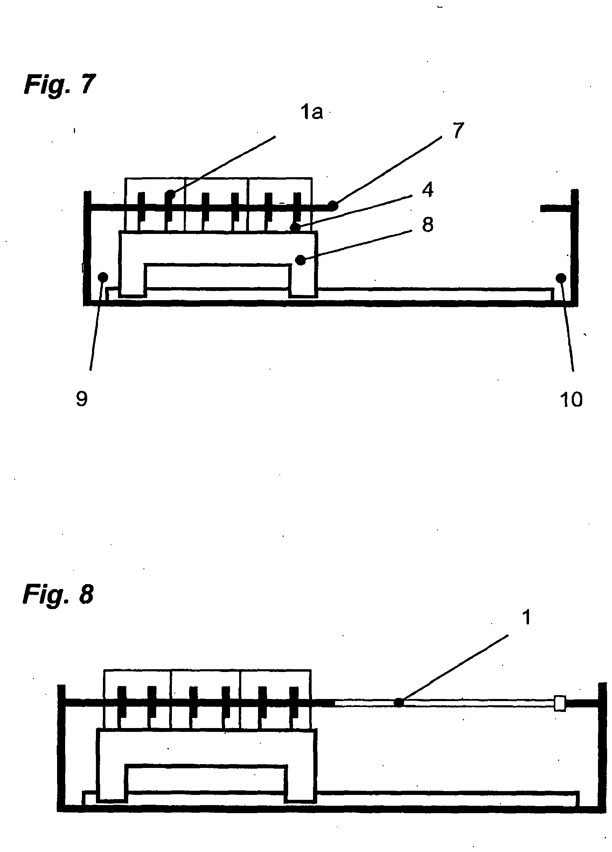

Gemäß Figur 7 ist in einer vorteilhaften Weiterbildung der vorliegenden Erfindung der Grundkörper 8 als Schlitten ausgeführt, der axial zwischen zwei Endpositionen 9 und 10 bewegbar ist. In der Endposition 9 sind dabei die Nocken 1 a und die gegebenenfalls weiteren Funktionselemente, welche über die Positioniereinrichtungen 4 auf dem Grundkörper 8 gehalten sind, mit dem Zentrierdorn 7 in Eingriff. Der Grundkörper 8 ist dabei axial entlang des Zentrierdorns 7 verschieblich.

Wie in Figur 8 dargestellt, ist an den Zentrierdorn 7 anschließend mit gleicher axialer Lage eine Nockenwelle 1 spannbar. Gemäß dieser Ausführung der Erfindung wird der Grundkörper 8 aus der beschriebenen Endposition 9 in die Endposition 10 bewegt, in welcher die anschließend an den Zentrierdorn 7 gespannte Nockenwelle 1 in die Lager 3 im Gehäuse 2 und in die Öffnungen 1 b in den Nocken 1 a und gegebenenfalls in die Öffnungen der weiteren Funktionselemente eingreift. Der Fügevorgang erfolgt durch eine Schlittenbewegung des auf dem Zentrierdorn 7 vorpositionierten Verbundes aus Gehäuse 2, Nocken 1a und gegebenenfalls weiteren Funktionselementen.

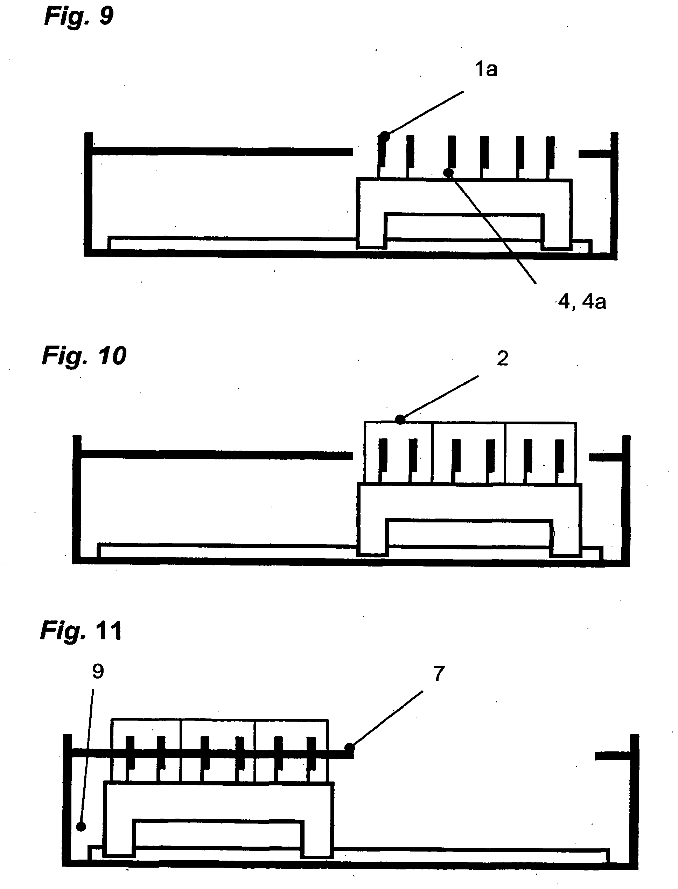

Gemäß den Figuren 9 bis 13 wird weiterhin ein Verfahren zum Fügen eines Montageverbundes aus einer Nockenwelle 1 in ungeteilte Lager 3 eines die Nockenwelle 1 tragenden Gehäuses 2 beschrieben. Es beinhaltet die nachfolgend ausgeführten Verfahrensschritte.

In einem ersten Verfahrensschritt gemäß Figur 9 werden die Nocken 1 a und gegebenenfalls weitere Funktionselemente wie Geberräder, Lagerelemente und Antriebsräder in die Ausnehmungen 4a der Positioniereinrichtung 4 eingebracht.

Weiterhin erfolgt gemäß Figur 10 ein Positionieren des Gehäuses 2, in welchem die in dieser Figur noch nicht dargestellte Nockenwelle 1 getragen wird. Dabei erfolgt das Positionieren des Gehäuses 2 in einer Lage in der axial die Lager 3 für die Welle im Gehäuse 2 mit den Öffnungen 1 b in den Nocken 1 a und gegebenenfalls den weiteren Funktionselementen fluchten, so dass eine Nockenwelle 1 durch die Lager 3 des Gehäuses 2 und die Öffnungen 1 b in den Nocken 1 a einschiebbar ist. Es erfolgt ein Erwärmen der Nocken 1a und der gegebenenfalls weiteren Funktionselemente, wobei dies in der Vorrichtung selbst nach dem Einlegen erfolgen kann oder alternativ bereits vorerwärmte Nocken 1 a in die Ausnehmung 4a eingebracht werden. Es erfolgt weiterhin ein Abkühlen der in das Gehäuse 2 einzubringenden Nockenwelle 1 vor dem Fügevorgang. Erfindungsgemäß wird eine Haltekraft zwischen Nocken 1 a und den gegebenenfalls weiteren Funktionselementen und der Ausnehmung 4a der Positioniereinrichtung 4 aufgebracht, um eine sichere Anlage der Nocken 1 a und der Funktionselemente in den Ausnehmungen 4a der Positioniereinrichtung 4 zu sichern.

Wie in Figur 11 gezeigt, erfolgt vor dem Einbringen der Nockenwelle 1 durch die Lager 3 im Gehäuse 2 und durch die Öffnungen 1 b in den Nocken 1 a durch Verschieben des Grundkörpers 8 in Richtung Endposition 9, ein Einbringen des Zentrierdorns 7 anstelle der später zu fügenden Nockenwelle 1. Dieser zentriert die Nocken 1 a und gegebenenfalls die weiteren Funktionselemente in ihrer axialen Lage und erzeugt damit eine mechanische Haltekraft für die Nocken 1 a und gegebenenfalls weitere Funktionselemente in den Konturen der Ausnehmungen 4a.

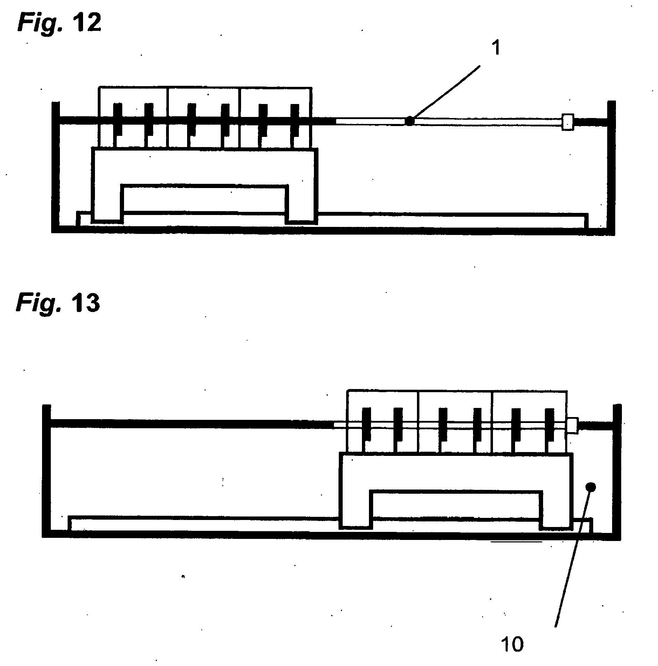

Gemäß Figur 12 wird nachfolgend die Nockenwelle 1 an den Zentrierdorn 7 außerhalb des Gehäuses 2 in axial gleicher Lage positioniert.

Entsprechend Figur 13 erfolgt der Fügevorgang mittels einer Bewegung des Grundkörpers 8 in Richtung der Endposition 10, also einer Relativbewegung zwischen Gehäuse 2 und Zentrierdorn 7 und der sich daran anschließenden Nockenwelle 1, bei dem die Nockenwelle 1 die Position des Zentrierdornes 7 innerhalb des Gehäuses 2 einnimmt. Das Einbringen des Zentrierdorns 7 erleichtert das Fügen, da durch die exakt vorpositionierte Lage der Öffnungen 1 b der Nocken 1 a und der Lager 3 für die Nockenwelle 1 im Gehäuse 2 beim Einbringen der Nockenwelle 1 keine Positionierung mehr erfolgen muss. Weiterhin werden die Nocken 1 a bis zum Fügevorgang durch den Zentrierdorn 7 in ihrer Lage auf den Ausnehmungen 4a fixiert.

## Patentansprüche

1. Vorrichtung zur Montage von einem Verbund, bestehend aus mindestens einer Funktionselemente tragenden Welle, insbesondere Massenausgleichswelle oder Nockenwelle, und einem diese in ungeteilten Lagern (3) abstützenden Gehäuse (2), wobei die Vorrichtung Positioniereinrichtungen (4) aufweist, die vor dem Fügen die Funktionselemente so in vorbestimmter Phasenlage im Gehäuse (2) halten, dass die mindestens eine Welle durch die Lager (3) des Gehäuses (2) und Öffnungen (1b) in den Funktionselementen einschiebbar ist, wobei die Positioniereinrichtung (4) mit Ausnehmungen (4a) für die Funktionselemente versehen ist, die einen Anschlag (5) aufweisen, welcher das Funktionselement entgegen der Fügerichtung der Welle abstützt, wobei die Ausnehmungen (4a) der Positioniereinrichtungen (4) eine Teilkontur der Kontur der Funktionselemente als Negativprofil aufweisen, so dass die Funktionselemente in einer Phasenlage gemäß ihrer Fügeposition gehalten werden, wobei die Teilkontur der Ausnehmungen (4a) die Funktionselemente zumindest auf einem Teil von deren Außenkontur umgreift, **dadurch gekennzeichnet, dass** die Ausnehmungen (4a) derart gestaltet sind, dass eine zusätzliche, willkürlich schaltbare Haltekraft zwischen den Funktionselementen und den Ausnehmungen (4a) erzeugbar ist.

2. Vorrichtung nach Anspruch 1, **dadurch gekennzeichnet, dass** die Teilkontur die Funktionselemente auf mehr als der Hälfte von deren Umfang umgreift.

3. Vorrichtung nach Anspruch 1 oder 2, **dadurch gekennzeichnet, dass** die Haltekraft magnetisch erzeugt wird.

4. Vorrichtung nach Anspruch 1 oder 2, **dadurch gekennzeichnet, dass** die Haltekraft mittels Unterdruck erzeugt wird.

5. Vorrichtung nach Anspruch 4, **dadurch gekennzeichnet, dass** die Ausnehmungen (4a) auf einem Teilbereich der die Funktionselemente teilweise umgreifenden Kontur eine Öffnung (6) aufweisen, welche von der Oberfläche der Funktionselemente überdeckt und mit Unterdruck beaufschlagbar ist.

6. Vorrichtung nach einer der vorhergehenden Ansprüche 1 bis 5, **dadurch gekennzeichnet, dass** die Vorrichtung einen Zentrierdorn (7) aufweist, der durch die Lager (3) des Gehäuses (2) und die Öffnungen (1b) in den Funktionselementen einschiebbar ist wobei dieser einen Maximaldurchmesser aufweist, der gleich oder kleiner zu der zu fügenden Welle ist.

7. Vorrichtung nach Anspruch 6, **dadurch gekennzeichnet, dass** die Vorrichtung einen Grundkörper (8) aufweist, der axial bewegbar ist und auf dem die Positioniereinrichtungen (4) für die Funktionselemente angeordnet sind, wobei an den Zentrierdorn (7) anschließend eine Welle in gleicher axialer Positionierung in die Vorrichtung einbringbar und axial spannbar ist.

8. Vorrichtung nach einem der vorherigen Ansprüche, **dadurch gekennzeichnet, dass** diese eine Einheit zum Erwärmen der Funktionselemente aufweist, welche diese im positionierten Zustand auf den Ausnehmungen (4a) der Positioniereinrichtungen (4) erwärmt.

9. Vorrichtung nach Anspruch 8, **dadurch gekennzeichnet, dass** die Einheit zum Erwärmen der Nocken (1a) und gegebenenfalls weiterer Funktionselemente ein induktiver Wärmeerzeuger ist und die Positioniereinrichtungen (4) die Spulen zum induktiven Erwärmen der Nocken (1a) und gegebenenfalls weiterer Funktionselemente tragen.

10. Verfahren zum Fügen eines Verbundes, bestehend aus mindestens einer Funktionselemente tragenden Welle, insbesondere einer Massenausgleichswelle oder Nockenwelle, und einem diese in ungeteilten Lagern (3) abstützenden Gehäuse (2) mittels einer Vorrichtung, die Positioniereinrichtungen (4) aufweist, mit folgenden Verfahrensschritten:
- Erwärmen der Funktionselemente, außerhalb der Vorrichtung vor dem Einbringen in Ausnehmungen der Positioniereinrichtungen (4),
- Einbringen der Funktionselemente in die Ausnehmungen (4a) der Positioniereinrichtungen (4),
- Positionieren des die Welle tragenden Gehäuses (2) in einer Lage, in der axial die Lager (3) für die Welle im Gehäuse (2) mit Öffnungen (1 b) in den Funktionselementen fluchten, so dass die Welle durch die Lager (3) des Gehäuses (2) und die Öffnungen (1 b) in den Funktionselementen einschiebbar ist,
- Abkühlen der in das Gehäuse (2) einzubringenden Welle,
- Einschieben eines Zentrierdornes (7) durch die Lager (3) des Gehäuses (2) und die Öffnungen (1 b) in den Funktionselementen, wobei der Zentrierdorn einen Maximaldurchmesser aufweist, der gleich oder kleiner zu der zu fügenden Welle ist,
- Anlegen einer zusätzlichen Haltekraft zwischen Funktionselemente und den Ausnehmungen (4a) der Positioniereinrichtungen (4),
- Einbringen der Welle durch die Lager (3) im Gehäuse (2) und durch die Öffnungen (1 b) in den Funktionselementen,
- wobei ein auf der Montagevorrichtung angeordneter Grundkörper (8), der das Gehäuse (2) und die Positioniereinrichtungen (4) trägt, nach dem Einbringen der Funktionselemente und dem Positionieren des Gehäuses (2) axial auf der Montagevorrichtung relativ zum Zentrierdorn (7) verfahren wird, wobei der fest mit einer Tragstrukturder Montagevorrichtung verbundene Zentrierdorn (7) in die Lager (3) im Gehäuse (2) und die Öffnungen (1 b) in den Funktionselementen eingreift und nachfolgend eine Welle anschließend an den Zentrierdorn (7) in axial gleicher Lage zum Zentrierdorn (7) gespannt wird und durch ein Verfahren des Grundkörpers (2) die Welle mit den Funktionselementen im Gehäuse (2) gefügt wird.

11. Verfahren zum Fügen eines Verbundes, bestehend aus mindestens einer Funktionselemente tragenden Welle, insbesondere einer Massenausgleichswelle oder Nockenwelle, und einem diese in ungeteilten Lagern (3) abstützenden Gehäuse mittels einer Vorrichtung, die Positioniereinrichtungen (4) aufweist, mit folgenden Verfahrensschritten:
- Erwärmen der Funktionselemente, außerhalb der Vorrichtung vor dem Einbringen in Ausnehmungen der Positioniereinrichtungen (4),
- Einbringen der Funktionselemente in die Ausnehmungen (4a) der Positioniereinrichtungen (4),
- Positionieren des die Welle tragenden Gehäuses (2) in einer Lage, in der axial die Lager (3) für die Welle im Gehäuse (2) mit Öffnungen (1b) in den Funktionselementen fluchten, so dass die Welledurch die Lager (3) des Gehäuses (2) und die Öffnungen (1 b) in den Funktionselementen einschiebbar ist,
- Abkühlen der in das Gehäuse (2) einzubringenden Welle,
- Einschieben einesZentrierdornes (7) durch die Lager (3) des Gehäuses (2) und die Öffnungen (1 b) in den Funktionselementen, wobei der Zentrierdom einen Maximaldurchmesser aufweist, der gleich oder kleiner zu der zu fügenden Welle ist,
- Anlegen einer zusätzlichen Haltekraft zwischen den Funktionselementen und den Ausnehmungen (4a) der Positioniereinrichtungen (4),
- Spannen der Welle an den Zentrierdorn (7) in axial gleicher Lage,
- Einbringen der Welle durch die Lager (3) im Gehäuse (2) und durch die Öffnungen (1 b) in den Funktionselementen -wobei die Positioniereinrichtung (4) fest auf der Montagevorrichtung angeordnet ist und nach dem Einbringen der Funktionselemente und dem Positionieren des Gehäuses (2) der Zentrierdom (7) durch axiales Verfahren zum Gehäuse (2) in die Lager (3) des Gehäuses (2) und die Öffnungen (1 b) in den Funktionselementen eingebracht wird und nach dem Spannen der Welle außerhalb des Gehäuses (2) an den Zentrierdorn (7) dann ein gemeinsames Verfahren von Welle und Zentrierdorn (7) erfolgt, wobei die Welle in die Öffnungen (1 b) der Funktionselemente durch die Lager (3) im Gehäuse (2) gefügt wird.

12. Verfahren nach einem der vorherigen Ansprüche, **dadurch gekennzeichnet, dass** eine zusätzliche Haltekraft für die Funktionselemente erzeugt wird indem diese vor dem Fügen mittels Unterdruck in den Ausnehmungen (4a) der Positioniereinrichtung (4) gehalten werden.

## Claims

1. Apparatus for assembling an assembly comprising at least one shaft carrying functional elements, in particular mass-balancing shaft or camshaft, and a housing (2) supporting said shaft in undivided bearings (3), wherein the apparatus has positioning devices (4), which, before the joining, hold the functional elements in a predetermined phase position in the housing (2) in such a way that the at least one shaft can be pushed through the bearings (3) of the housing (2) and openings (1b) in the functional elements, wherein the positioning device (4) is provided with recesses (4a) for the functional elements that have a stop (5), which supports the functional element counter to the joining direction of the shaft, wherein the recesses (4a) of the positioning devices (4) have a partial contour of the contour of the functional elements as a negative profile, so that the functional elements are held in a phase position according to their joining position, wherein the partial contour of the recesses (4a) engages around the functional elements at least over part of the outer contour thereof, **characterized in that** the recesses (4a) are configured in such a way that an additional holding force, which can be switched at will, can be produced between the functional elements and the recesses (4a).

2. Apparatus according to Claim 1, **characterized in that** the partial contour engages around the functional elements over more than half the circumference thereof.

3. Apparatus according to Claim 1 or 2, **characterized in that** the holding force is produced magnetically.

4. Apparatus according to Claim 1 or 2, **characterized in that** the holding force is produced by means of negative pressure.

5. Apparatus according to Claim 4, **characterized in that** the recesses (4a) on a partial region of the contour engaging part of the way around the functional elements have an opening (6), which is covered over by the surface of the functional elements and can be subjected to negative pressure.

6. Apparatus according to one of the preceding Claims 1 to 5, **characterized in that** the apparatus has a centering pin (7), which can be pushed through the bearings (3) of the housing (2) and the openings (1b) in the functional elements, wherein the centering pin has a maximum diameter that is made the same as or smaller than the shaft to be joined.

7. Apparatus according to Claim 6, **characterized in that** the apparatus has a basic body (8), which is axially movable and on which the positioning devices (4) for the functional elements are arranged, wherein, adjoining the centering pin (7), a shaft can be introduced into the apparatus and axially clamped in the same axial positioning.

8. Apparatus according to one of the preceding claims, **characterized in that** it has a unit for heating the functional elements, which heats them in the positioned state on the recesses (4a) of the positioning devices (4).

9. Apparatus according to Claim 8, **characterized in that** the unit for heating the cams (1a) and any further functional elements there may be is an inductive heat generator and the positioning devices (4) carry the coils for the inductive heating of the cams (1a) and any further functional elements there may be.

10. Method for joining an assembly comprising at least one shaft carrying functional elements, in particular a mass-balancing shaft or camshaft, and a housing (2) supporting said shaft in undivided bearings (3) by means of an apparatus which has positioning devices (4), with the following method steps:
- heating the functional elements outside the apparatus before they are introduced into recesses of the positioning devices (4),
- introducing the functional elements into the recesses (4a) of the positioning devices (4),
- positioning the housing (2) carrying the shaft in a position in which the bearings (3) for the shaft in the housing (2) are axially in line with openings (1b) in the functional elements, so that the shaft can be pushed in through the bearings (3) of the housing (2) and the openings (1b) in the functional elements,
- cooling the shaft to be introduced into the housing (2),
- pushing a centering pin (7) through the bearings (3) of the housing (2) and the openings (1b) in the functional elements, wherein the centering pin has a maximum diameter that is the same as or smaller than the shaft to be joined,
- applying an additional holding force between functional elements and the recesses (4a) of the positioning devices (4),
- introducing the shaft through the bearings (3) in the housing (2) and through the openings (1b) in the functional elements,
- wherein, after introducing the functional elements and positioning the housing (2), a basic body (8) which is arranged on the assembly apparatus and carries the housing (2) and the positioning devices (4) is made to move axially on the assembly apparatus in relation to the centering pin (7), wherein the centering pin (7) fixedly connected to a supporting structure of the assembly apparatus engages in the bearings (3) in the housing (2) and the openings (1b) in the functional elements and a shaft is subsequently clamped onto the centering pin (7) in an adjoining manner in axially the same position in relation to the centering pin (7) and, by making the basic body (2) move, the shaft is joined with the functional elements in the housing (2).

11. Method for joining an assembly comprising at least one shaft carrying functional elements, in particular a mass-balancing shaft or camshaft, and a housing supporting said shaft in undivided bearings (3) by means of an apparatus which has positioning devices (4), with the following method steps:
- heating the functional elements outside the apparatus before they are introduced into recesses of the positioning devices (4),
- introducing the functional elements into the recesses (4a) of the positioning devices (4),
- positioning the housing (2) carrying the shaft in a position in which the bearings (3) for the shaft in the housing (2) are axially in line with openings (1b) in the functional elements, so that the shaft can be pushed in through the bearings (3) of the housing (2) and the openings (1b) in the functional elements,
- cooling the shaft to be introduced into the housing (2),
- pushing a centering pin (7) through the bearings (3) of the housing (2) and the openings (1b) in the functional elements, wherein the centering pin has a maximum diameter that is the same as or smaller than the shaft to be joined,
- applying an additional holding force between the functional elements and the recesses (4a) of the positioning devices (4),
- clamping the shaft onto the centering pin (7) inaxially the same position,
- introducing the shaft through the bearings (3) in the housing (2) and through the openings (1b) in the functional elements,
- wherein the positioning device (4) is fixedly arranged on the assembly apparatus and, after introducing the functional elements and positioning the housing (2), the centering pin (7) is introduced into the bearings (3) of the housing (2) and the openings (1b) in the functional elements by axial movement with respect to the housing (2) and, after clamping of the shaft outside the housing (2) onto the centering pin (7), a joint movement of the shaft and the centering pin (7) is then performed, wherein the shaft is joined in the openings (1b) of the functional elements through the bearings (3) in the housing (2).

12. Method according to one of the preceding claims, **characterized in that** an additional holding force for the functional elements is produced by the latter being held in the recesses (4a) of the positioning device (4) by means of negative pressure before the joining.

## Revendications

1. Dispositif pour le montage d'un ensemble, constitué d'au moins un arbre portant des éléments fonctionnels, en particulier d'un arbre d'équilibrage de masse ou d'un arbre à cames et d'un boîtier (2) les supportant dans les paliers non divisés (3), le dispositif présentant des systèmes de positionnement (4) qui, avant l'assemblage, retiennent les éléments fonctionnels dans une position de phase prédéterminée dans le boîtier (2), de telle sorte que l'au moins un arbre puisse être enfoncé à travers les paliers (3) du boîtier (2) et des ouvertures (1b) dans les éléments fonctionnels, le système de positionnement (4) étant pourvu d'évidements (4a) pour les éléments fonctionnels, lesquels présentent une butée (5) qui supporte l'élément fonctionnel dans le sens opposé à la direction d'assemblage de l'arbre, les évidements (4a) des systèmes de positionnement (4) présentent un contour partiel du contour des éléments fonctionnels sous forme de profilé négatif de telle sorte que les éléments fonctionnels soient retenus dans une position de phase en fonction de leur position d'assemblage, le contour partiel des évidements (4a) venant en prise autour des éléments fonctionnels au moins sur une partie de leur contour extérieur, **caractérisé en ce que** les évidements (4a) sont configurés de telle sorte qu'une force de retenue supplémentaire pouvant être commutée arbitrairement puisse être générée entre les éléments fonctionnels et l'évidement (4a) .

2. Dispositif selon la revendication 1, **caractérisé en ce que** le contour partiel vient en prise autour des éléments fonctionnels sur plus de la moitié de leur périphérie.

3. Dispositif selon la revendication 1 ou 2, **caractérisé en ce que** la force de retenue est produite magnétiquement.

4. Dispositif selon la revendication 1 ou 2, **caractérisé en ce que** la force de retenue est produite au moyen d'une dépression.

5. Dispositif selon la revendication 4, **caractérisé en ce que** les évidements (4a), sur une région partielle venant en prise au moins en partie autour des éléments fonctionnels, présentent une ouverture (6) qui est recouverte par la surface des éléments fonctionnels et qui peut être sollicitée par une dépression.

6. Dispositif selon l'une quelconque des revendications précédentes 1 à 5, **caractérisé en ce que** le dispositif présente un mandrin de centrage (7) qui peut être enfoncé à travers les paliers (3) du boîtier (2) et les ouvertures (1b) dans les éléments fonctionnels, celui-ci présentant un diamètre maximal qui est inférieur ou égal à celui de l'arbre à assembler.

7. Dispositif selon la revendication 6, **caractérisé en ce que** le dispositif présente un corps de base (8) qui peut être déplacé axialement et sur lequel sont disposés les systèmes de positionnement (4) pour les éléments fonctionnels, un arbre se raccordant au mandrin de centrage (7) pouvant être introduit et pouvant être serré axialement dans le dispositif suivant le même positionnement axial.

8. Dispositif selon l'une quelconque des revendications précédentes, **caractérisé en ce que** celui-ci présente une unité pour chauffer les éléments fonctionnels, laquelle chauffe ceux-ci dans l'état positionné sur les évidements (4a) des systèmes de positionnement (4).

9. Dispositif selon la revendication 8, **caractérisé en ce que** l'unité pour chauffer les cames (1a) et éventuellement d'autres éléments fonctionnels est un générateur de chaleur par induction et les systèmes de positionnement (4) portent les bobines pour le chauffage par induction des cames (1a) et éventuellement d'autres éléments fonctionnels.

10. Procédé d'assemblage d'un ensemble, constitué d'au moins un arbre portant des éléments fonctionnels, en particulier d'un arbre d'équilibrage de masse ou d'un arbre à cames, et d'un boîtier (2) supportant celui-ci dans des paliers non divisés (3) au moyen d'un dispositif qui présente des systèmes de positionnement (4), comprenant les étapes de procédé suivantes :
- chauffage des éléments fonctionnels à l'extérieur du dispositif avant l'introduction dans des évidements des systèmes de positionnement (4),
- introduction des éléments fonctionnels dans les évidements (4a) des systèmes de positionnement (4),
- positionnement du boîtier (2) portant l'arbre dans une position dans laquelle les paliers (3) pour l'arbre dans le boîtier (2) sont en alignement axial avec des ouvertures (1b) dans les éléments fonctionnels, de telle sorte que l'arbre puisse être enfoncé à travers les paliers (3) du boîtier (2) et les ouvertures (1b) dans les éléments fonctionnels,
- refroidissement de l'arbre devant être introduit dans le boîtier (2),
- enfoncement d'un mandrin de centrage (7) à travers les paliers (3) du boîtier (2) et les ouvertures (1b) dans les éléments fonctionnels, le mandrin de centrage présentant un diamètre maximal qui est inférieur ou égal à celui de l'arbre à assembler,
- application d'une force de retenue supplémentaire entre les éléments fonctionnels et les évidements (4a) des systèmes de positionnement (4),
- introduction de l'arbre à travers les paliers (3) dans le boîtier (2) et à travers les ouvertures (1b) dans les éléments fonctionnels,
- un corps de base (8) disposé sur le dispositif de montage, lequel porte le boîtier (2) et les systèmes de positionnement (4), étant déplacé après l'introduction des éléments fonctionnels et le positionnement du boîtier (2) axialement sur le dispositif de montage par rapport au mandrin de centrage (7), le mandrin de centrage (7) connecté fixement à une structure porteuse du dispositif de montage s'engageant dans les paliers (3) dans le boîtier (2) et les ouvertures (1b) dans les éléments fonctionnels et ensuite un arbre se raccordant au mandrin de centrage (7) étant serré dans la même position axiale au mandrin de centrage (7) et par un déplacement du corps de base (2), l'arbre étant assemblé aux éléments fonctionnels dans le boîtier (2).

11. Procédé d'assemblage d'un ensemble, constitué d'au moins un arbre portant des éléments fonctionnels, en particulier d'un arbre d'équilibrage de masse ou d'un arbre à cames, et d'un boîtier les supportant dans les paliers non divisés (3), au moyen d'un dispositif qui présente des systèmes de positionnement (4), comprenant les étapes de procédé suivantes :
- chauffage des éléments fonctionnels à l'extérieur du dispositif avant l'introduction dans des évidements des systèmes de positionnement (4),
- introduction des éléments fonctionnels dans les évidements (4a) des systèmes de positionnement (4),
- positionnement du boîtier (2) portant l'arbre dans une position dans laquelle les paliers (3) pour l'arbre dans le boîtier (2) sont en alignement axial avec des ouvertures (1b) dans les éléments fonctionnels, de telle sorte que l'arbre puisse être enfoncé à travers les paliers (3) du boîtier (2) et les ouvertures (1b) dans les éléments fonctionnels,
- refroidissement de l'arbre devant être introduit dans le boîtier (2),
- enfoncement d'un mandrin de centrage (7) à travers les paliers (3) du boîtier (2) et les ouvertures (1b) dans les éléments fonctionnels, le mandrin de centrage présentant un diamètre maximal qui est inférieur ou égal à celui de l'arbre à assembler,
- application d'une force de retenue supplémentaire entre les éléments fonctionnels et les évidements (4a) des systèmes de positionnement (4),
- serrage de l'arbre sur le mandrin de centrage (7) dans la même position axiale,
- introduction de l'arbre à travers les paliers (3) dans le boîtier (2) et à travers les ouvertures (1b) dans les éléments fonctionnels, le système de positionnement (4) étant disposé fixement sur le dispositif de montage, et après l'introduction des éléments fonctionnels et le positionnement du boîtier (2), le mandrin de centrage (7) étant introduit par déplacement axial vers le boîtier (2) dans les paliers (3) du boîtier (2) et les ouvertures (1b) dans les éléments fonctionnels, et après le serrage de l'arbre à l'extérieur du boîtier (2) sur le mandrin de centrage (7), un déplacement commun de l'arbre et du mandrin de centrage (7) étant alors produit, l'arbre étant assemblé dans les ouvertures (1b) des éléments fonctionnels à travers les paliers (3) dans le boîtier (2).

12. Procédé selon l'une quelconque des revendications précédentes, **caractérisé en ce que** la force de retenue supplémentaire pour les éléments fonctionnels est générée par le fait que ceux-ci, avant l'assemblage, sont retenus au moyen d'une dépression dans les évidements (4a) du système de positionnement (4).
